# EUROPEAN PATENT APPLICATION

(11) **EP 1 932 585 A1**
(43) Date of publication of application: **18.06.2008**
(21) Application number: 07020922.6
(22) Date of filing: 25.10.2007
(51) Int. Cl.: B01J 19/00, C01B 3/22, C01B 3/26

(54) **Microapparatus for producing hydrogen**

(30) Priority: 15.12.2006 CN 200620164633 U
(71) Applicant: Hwa Cheng Technology Co., Ltd., Tainan City (TW)
(72) Inventor: Wang, Huang-Hsiang, Tainan City (TW)
(74) Representative: Kador & Partner

(57) **Abstract**

A hydrogen production microapparatus (1) includes a converting unit (2) therein; the converting unit (2) contains conversion catalysts therefore after hydrocarbons (3) are put into the hydrogen production microapparatus (1), the hydrocarbons (3) will be decomposed so as to produce hydrogen gas (4) usable as fuels owing to the catalysis and conversion caused by the conversion catalysts contained in the converting unit (2).

## Description

### BACKGROUND OF THE INVENTION

### 1. Field of the invention

The present invention relates to a microapparatus for producing hydrogen, more particularly one, which can convert organic/inorganic hydrocarbons into high purity hydrogen gas with the help of conversion catalysts contained in its converting unit, without consuming any other kind of energy in order for hydrogen gas to be produced at a relatively low cost.

### 2. Brief Description of the Prior Art

Power is one important factor in economical development. Watt's steam engine was responsible for many of the improvements in life brought about by the Industrial Revolution. Currently existing vehicles are usually powered by internal combustion engines, and machines and household appliances are usually powered with electricity. Hydrocarbon fuels such as petrol, coals, and natural gas are major energy sources for engines and electricity generation. When the above-mentioned energy sources are burning, a large amount of carbon dioxide (CO2) and other polluting gases will be produced, which will cause global warming and air pollution when discharged into the atmosphere.

Humans' hunger for deriving the majority of energy from the burning of fossil fuels like coal, oil and natural gas, has resulted in the dumping of billions of tons of greenhouse gases into the atmosphere, primarily carbon dioxide (CO2). Whenever we save energy or use it more efficiently, we reduce the demand for gasoline, oil, coal, and natural gas. Less burning of these fossil fuels means lower emissions of carbon dioxide. Another important way to reduce emissions of carbon dioxide is to develop new energy sources.

Hydrogen is the smallest, lightest, simplest and most abundant of the chemical elements, constituting roughly 75% of the universe's elemental mass. Hydrogen gas has the following advantages when used as fuels: hydrogen can be totally non-polluting (water is the exhaust); hydrogen can be economically competitive with gasoline or diesel; hydrogen is safer than gasoline, diesel, or natural gas; hydrogen can help prevent the depletion of fossil fuel reserves; hydrogen can be produced in any country.

An improvement on an energy producing apparatus is developed, which includes a housing member, and an energy producing mechanism. The energy producing mechanism is disposed in the housing member, and comprises a mixing tank, a hydrogen gas supplying source, an oxygen gas supplying source, and a cooling agent supplying source. The energy producing mechanism further has a control panel, which is electrically connected to the mixing tank, the hydrogen gas supplying source, the oxygen gas supplying source, and the cooling agent supplying source for detecting conditions in them. The housing member has a separating plate therein, which divides the internal room of the housing into upper and lower portions. The housing member has an upper pivotal lid, and a sensing element is fitted on one lateral side of the housing member. The sensing element has on an upper side thereof several holes facing the control panel, and has an outlet on any of lateral sides thereof.

However, elemental hydrogen exists as the diatomic gas, H2, and is relatively rare on Earth, and industrially produced from hydrocarbons such as methane. Hydrogen may be produced from water using the process of electrolysis, but this process is relatively expensive. Hydrogen production can be carried out by means of using high pressure and high temperature besides electrolysis. No matter which one of the above-mentioned methods is used, a large amount of electrical energy/coal/natural gas will be used. And, the resulting hydrogen has less energy content than was required to produce it. In other words, there is still consumption of fossil fuels like coal, oil, and natural gas.

### SUMMARY OF THE INVENTION

Therefore, it is a main object of the present invention to provide a hydrogen production microapparatus to overcome the above-mentioned problems. A hydrogen production microapparatus according to a first embodiment of the present invention includes a converting unit therein; the converting unit contains conversion catalysts therefore after organic/inorganic hydrocarbons are put into the hydrogen production microapparatus, they will be decomposed to produce hydrogen gas usable as fuels owing to catalysis and conversion caused by the conversion catalysts contained in the converting unit. In other words, hydrogen gas can be produced by means of the hydrogen production microapparatus without consuming any other kind of energy.

A hydrogen production microapparatus according to another embodiment includes a converting unit, and a proton-exchange membrane unit therein; the converting unit contains conversion catalysts. Therefore, after organic/inorganic hydrocarbons are put into the hydrogen production microapparatus, hydrogen gas will be produced to be usable as fuels owing to the catalysis and conversion caused by the conversion catalysts contained in the converting unit. Next, the hydrogen gas will pass through the proton-exchange membrane unit to produce electrical energy usable by electrical appliances.

A hydrogen production microapparatus according to yet another embodiment includes a first converting unit, and a second converting unit therein; the first converting unit contains conversion catalysts while the second converting unit contains oxidization catalysts. Therefore, after organic/inorganic hydrocarbons are put into the hydrogen production microapparatus, they will be decomposed so as to produce hydrogen gas usable as fuels. In addition, the organic/inorganic hydrocarbons can be oxidized to produce heat energy owing to oxidization reaction caused by the oxidization catalysts contained in the second converting unit.

### BRIEF DESCRIPTION OF THE DRAWINGS

The present invention will be better understood by referring to the accompanying drawings, wherein:
Fig. 1 is a block diagram of the first preferred embodiment of the present invention,
Fig. 2 is a block diagram of the second preferred embodiment of the present invention, and
Fig. 3 is a block diagram of the third preferred embodiment of the present invention.

### DETAILED DESCRIPTION OF THE PREFERRED EMBODIMENTS

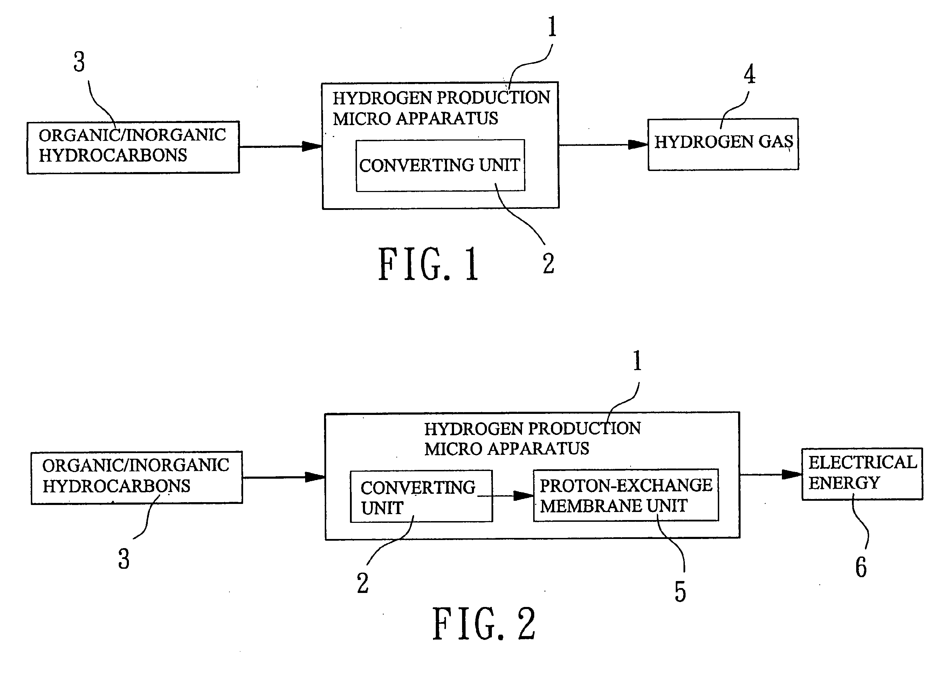

Referring to Fig. 1, a first preferred embodiment 1 of a microapparatus for producing hydrogen includes a converting unit (2) therein. The converting unit (2) contains conversion catalysts such as palladium (Pd) and platinum (Pt). Therefore, after organic/inorganic hydrocarbons (3) such as methanol are put into the hydrogen production microapparatus (1), the organic/inorganic hydrocarbons (3) will be decomposed so as to produce hydrogen gas (4) usable as fuels owing to the catalysis and conversion caused by the conversion catalysts contained in the converting unit (2).

Referring to Fig. 2, a second preferred embodiment 1 of a microapparatus for producing hydrogen includes a converting unit (2), and a proton-exchange membrane unit (5), both of which are disposed in the hydrogen production microapparatus (1). The converting unit (2) contains conversion catalysts such as palladium (Pd) and platinum (Pt). Therefore, after organic/inorganic hydrocarbons (3) such as methanol are put into the hydrogen production microapparatus (1), they will be decomposed so as to produce hydrogen gas (4) usable as fuels owing to the catalysis and conversion caused by the conversion catalysts contained in the converting unit (2). Next, the hydrogen gas (4) will pass through the proton-exchange membrane unit (5) to produce electrical energy (power) (6) usable by electrical appliances.

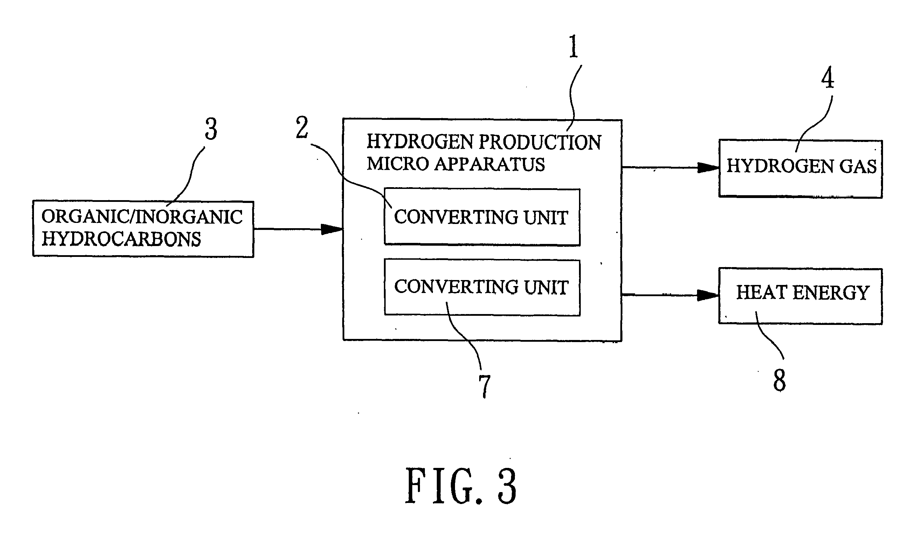

Referring to Fig. 3, a third preferred embodiment 1 of a microapparatus for producing hydrogen includes a first converting unit (2), and a second converting unit (7) therein. The first converting unit (2) contains conversion catalysts such as palladium (Pd) and platinum (Pt) while the second converting unit (7) contains oxidization catalysts. Therefore, after organic/inorganic hydrocarbons (3) such as methanol are put into the hydrogen production microapparatus (1), they will be decomposed so as to produce hydrogen gas (4) usable as fuels owing to the catalysis and conversion caused by the conversion catalysts contained in the first converting unit (2). In addition, the organic/inorganic hydrocarbons (3) will be oxidized to produce heat energy (8) owing to oxidization reaction caused by the oxidization catalysts contained in the second converting unit (7).

In summary, when the hydrogen production microapparatus (1) of the present invention is used, high purity hydrogen gas (4) can be produced from organic/inorganic hydrocarbons (3) owing to the catalysis and conversion caused by the conversion catalysts contained in the converting unit (2); the high purity hydrogen gas (4) can be next supplied to various kinds of energy source apparatuses taking hydrogen gas (4). Furthermore, electrical energy can be produced from the hydrogen gas (4) with the help of the proton-exchange membrane unit (5) of the hydrogen production microapparatus (1). Still furthermore, heat energy can be produced from organic/inorganic hydrocarbons (3) owing to the oxidization caused by the oxidization catalysts contained in the second converting unit (7) of the hydrogen production microapparatus (1).

The hydrogen production microapparatus (1) of the present invention can be used to supply hydrogen gas (4) to the above-mentioned improvement on an energy producing apparatus instead of the hydrogen gas (4) supplying source, thus allowing the improvement on an energy producing apparatus to continue functioning.

From the above description, it can be seen that the present invention at least has the following advantages:
1. The hydrogen production microapparatus of the present invention can convert organic/inorganic hydrocarbons into high purity hydrogen gas with the help of the conversion catalysts contained in its converting unit, without consuming any other kind of energy. Therefore, hydrogen gas can be produced at a relatively low cost by means of the hydrogen production microapparatus of the present invention.
2. The hydrogen production microapparatus of the present invention is equipped with the proton-exchange membrane unit for making hydrogen gas produce electrical energy usable by electrical appliances therefore it is very practical.
3. The hydrogen production microapparatus of the present invention is very practical because it can produce heat energy with the oxidization catalysts contained in another converting unit thereof causing oxidization of organic/inorganic hydrocarbons put thereinto.

## Claims

1. A microapparatus for producing hydrogen, comprising
a converting unit (2) therein, the converting unit (2) containing conversion catalysts for causing catalysis and conversion to make hydrocarbons decompose to produce hydrogen gas (4).

2. The microapparatus for producing hydrogen as recited in claim 1 further comprising a proton-exchange membrane unit (5), the proton-exchange membrane unit (5) being positioned on an output end of the converting unit (2).

3. The microapparatus for producing hydrogen as recited in claim 1 further comprising a second converting unit (7), the second converting unit (7) containing oxidization catalysts.
